**Europäisches Patentamt**

**European Patent Office**

**Office européen des brevets**

(19)

(11) **EP 1 375 571 A1**

(12) **EUROPÄISCHE PATENTANMELDUNG**

(43) Veröffentlichungstag:
**02.01.2004 Patentblatt 2004/01**

(51) Int Cl.[7]: **C08J 5/18**, C08L 67/02,
B32B 27/36

(21) Anmeldenummer: **03012259.2**

(22) Anmeldetag: **11.06.2003**

(84) Benannte Vertragsstaaten:
**AT BE BG CH CY CZ DE DK EE ES FI FR GB GR
HU IE IT LI LU MC NL PT RO SE SI SK TR**
Benannte Erstreckungsstaaten:
**AL LT LV MK**

(30) Priorität: **20.06.2002 DE 10227439**

(71) Anmelder: **Mitsubishi Polyester Film GmbH
65203 Wiesbaden (DE)**

(72) Erfinder:
• **Kliesch, Holger, Dr.
55252 Mainz (DE)**

• **Murschall, Ursula, Dr.
55283 Nierstein (DE)**
• **Kiehne, Thorsten, Dr.
65185 Wiesbaden (DE)**
• **Hilkert, Gottfried, Dr.
55291 Saulheim (DE)**
• **Janssens, Bart, Dr.
65187 Wiesbaden (DE)**

(74) Vertreter: **Schweitzer, Klaus, Dr. et al
Patentanwaltskanzlei Zounek,
Industriepark Kalle-Albert,
Gebäude H391
Rheingaustrasse 190-196
65174 Wiesbaden (DE)**

(54) **Transparente Folie aus PET und PEN mit UV-Schutz, Verfahren zu ihrer Herstellung und ihre Verwendung in Verpackungen mit verlängerter Shelflife**

(57) Die Erfindung betrifft eine Polyesterfolie mit einer Dicke von 4 bis 23 µm, die neben Polyethylenterephthalat als Hauptbestandteil 2 bis 20 Gew.-% Polyethylennaphthalat (bezogen auf die Masse der Folie) enthält und weniger als 30 Pinholes pro 100 m² aufweist.

Weiterhin betrifft die Erfindung ein Verfahren zur Herstellung solcher Folien sowie ihre Verwendung in Verpackungsverbunden.

**EP 1 375 571 A1**

## Beschreibung

Die Erfindung betrifft eine transparente Folie mit einer verringerten Durchlässigkeit für UV-Strahlung. Die Folie enthält sowohl Terephthalsäure- als auch Naphthalindicarbonsäureeinheiten und weist keine oder nur eine sehr geringe Anzahl von Pinholes auf. Die Erfindung betrifft ferner ein Verfahren zur Herstellung dieser Folie und ihre Verwendung in Verpackungen mit verlängerter Shelflife.

Wichtige Kenngrößen für die Eignung einer Folie für die Verpackung von verderblichen Gütern sind die Sauerstoffbarriere und bei durchsichtigen Verpackungen zusätzlich ihre UV (ultravioletter Anteil des Lichtes)-Durchlässigkeit. Der zweite Punkt ist besonders bei Lebensmitteln von Bedeutung, die z. B. in Supermärkten in Theken präsentiert werden, die von Lampen mit relativ hoher UV-Emission bestrahlt werden. Bei zu hoher UV-Durchlässigkeit der Verpackung kann es hier zu unschönen Verfärbungen und Geschmacksveränderungen kommen.

Ein besonders wichtiges drittes Kriterium für die Eignung einer Verpackungsfolie ist ihr Preis, da im Endverbrauchermarkt auch kleinere Preisunterschiede die Kaufentscheidung zu einem günstigeren Produkt hin verschieben können, auch wenn die Verpackung hohen Qualitätsansprüchen an die Haltbarkeit nicht gerecht wird.

Bei den derzeit kommerziell erhältlichen Verpackungsfolien auf Polyesterbasis handelt es sich fast ausschließlich um Folien auf PET (Polyethylenterephthalat)-Basis, z. B. Hostaphan® RNK. Solche Folien sind zwar preisgünstig und besitzen in der Regel bereits eine für viele Anwendungen akzeptable Sauerstoffbarriere, die jedoch insbesondere bei durchsichtigen, unmetallisierten Verpackungen häufig nicht ausreicht. Außerdem besitzt PET eine noch relativ hohe UV-Lichtdurchlässigkeit.

Folien aus PEN (Polyethylennaphthalat) weisen eine wesentlich höhere Sauerstoffbarriere auf und haben außerdem eine geringere UV-Durchlässigkeit, sind aber aufgrund des hohen Preises von PEN unwirtschaftlich und werden daher in der Praxis kaum verwendet.

Dieses Problem kann zwar teilweise durch die Verwendung von Mehrschichtfolien reduziert werden, welche eine oder mehrere PEN-Schichten auf einer PET-Basis enthalten (z. B. DE-A-197 20 505 oder WO 01/96114). Diese Folien haben jedoch Probleme mit der Delamination der Schichten aus den unterschiedlichen Polyestern und sind in der Produktion schwieriger herzustellen. Außerdem kann das anfallende Regenerat nicht mehr zum gleichen Wert wiederverwendet werden, da sich PET und PEN bei der Regenerierung mischen und so nicht mehr zur Erzeugung der teuren 100 Gew.-% oder nahezu 100 Gew.-% PEN-Schichten herangezogen werden können, sondern nur noch das vergleichsweise billige PET in anderen Schichten oder anderen Folien ersetzen. Aus diesen Gründen sind solche Folien zwar billiger als Folien, die zum überwiegenden Teil aus PEN bestehen, sind aber erheblich teurer als Standard-PET-Verpackungsfolien und kommen daher nur in Nischenmärkten mit besonderen Ansprüchen zum Einsatz.

Folien aus Blends von PET und PEN sind ebenfalls beschrieben (z. B. GB 2 344 596), es fehlen hier jedoch die Hinweise, wie sich aus diesen Blends eine Folie mit verbesserter UV- und Sauerstoffbarriere herstellen lässt, die zur Produktion von transparenten Verpackungen mit erhöhter Shelflife eingesetzt werden kann. Auch fehlen Hinweise darauf, welche PET/PEN-Mengenverhältnisse sich für die Herstellung von Folien mit guter Sauerstoff- und UV-Barriere eignen sowie Hinweise auf die Lösung des Pinhole-Problems.

Die UV-Durchlässigkeit von Polyesterfolien kann ganz allgemein auch durch den Zusatz von UV-Stabilisatoren/Absorbern wie z.B. Tinuvin® der Firma Ciba Specialities (Schweiz) verbessert werden. Die Verwendung solcher Verbindungen ist aber ebenfalls mit relativ hohen Kosten verbunden und bringt je nach verwendetem Stabilisator auch Probleme in der Eignung für den direkten Lebensmittelkontakt.

Folien gemäß dem Stand der Technik weisen häufig so genannte Pinholes - Löcher bzw. Dünnstellen - auf. Solche Pinholes entstehen u. a. durch das Herausfallen großer, locker eingebundener Partikel aus der Folie oder durch das Beschädigen von Nachbarfolienlagen durch eingebundene große Partikel oder durch Partikel auf den Walzen. Diese Pinholes verringern die Sauerstoffbarriere der Verpackung, in der sie enthalten sind, deutlich und können so zum Verderben des in der Verpackung mit Pinholes befindlichen Gutes führen. Dies gilt insbesondere für längere Lagerzeiten, welche mit Hilfe einer aufgabengemäßen Folie erreicht werden sollen. Zwar ist die Gesamtzahl der Pinholes auch bei am Markt befindlichen Folien in der Regel niedrig, d. h. bis zu 30 auf 100 m$^2$, dennoch bedeutet dies unter Umständen je nach Größe der Verpackung ein Verderben von mehreren Prozent des verpackten Gutes.

Aufgabe der vorliegenden Erfindung war es nun, eine Folie mit gegenüber reinen PET-Folien verbesserter Sauerstoff- und UV-Barriere zur Verfügung zu stellen, die keine oder nur eine geringe Anzahl an Pinholes aufweist, die sich kostengünstig produzieren lässt und für Verpackungsanwendungen geeignet ist, die auch bei höheren UV-Dosen eine gegenüber PET-Folien enthaltenden Verpackungen verbesserte Lebensdauer des verpackten Gutes gewährleistet.

Gelöst wird dies durch eine Folie der Dicke von 4 bis 23 μm, bevorzugt 6 bis 19 μm und besonders bevorzugt 7 bis 14 μm, die neben Polyethylenterephthalat 2 bis 20 Gew.-%, bevorzugt 4 bis 16 Gew.-% und besonders bevorzugt 6 bis 12 Gew.-% Polyethylennaphthalat enthält und weniger als 30 Pinholes pro 100 m$^2$ aufweist, sowie durch daraus hergestellte Verpackungen.

Überraschenderweise reichen die erfindungsgemäß niedrigen PEN-Gehalte sowohl bei Herstellung der Folie aus Mischungen von PET- und PEN-Chips (Blockcopolymere) als auch bei der Verwendung statistischer Copolymere aus, um eine deutliche Verlängerung der Lebensdauer von Lebensmitteln zu erreichen, die mittels dieser Folie verpackt wurden, im Vergleich zu Verpackungen aus herkömmlichen PET-Folien. Die erreichbare Verbesserung ist dabei abhängig von der Menge an PEN und der Foliendicke. So reichen für eine 23 µm dicke Folie 8 Gew.-% PEN aus, um während einer Lagerung von einem Monat unter den in herkömmlichen Kühltheken in Supermärkten herrschenden UV-Intensitäten eine Verfärbung des gefüllten Fleisches bzw. sonstigen Füllgutes zu verhindern. Bei Folien zwischen 6 und 12 µm sind für ähnlich gute Resultate 8 bis 16 Gew.-% PEN nötig.

PEN-Konzentrationen höher als der erfindungsgemäße Bereich führen zu einer reduzierten bis schließlich ausbleibenden Kristallisationsneigung. Dies führt wiederum zu einer deutlichen Abnahme der Sauerstoff- und Wasserdampfbarriere. Für das Erreichen einer ausreichenden Sauerstoff-Barriere von kleiner 100 {$cm^3$/($m^2$·d· bar)}.{Foliendicke in µm/12 µm} bzw. bevorzugt von kleiner 97 {$cm^3$/($m^2$·d· bar)}·{Foliendicke in µm/12 µm} und besonders bevorzugt von kleiner 95 {$cm^3$/($m^2$·d· bar)}·{Foliendicke in µm/12 µm} ist es daher vorteilhaft, wenn im DSC (Digital Scanning Calorimeter) unter den in Messmethoden beschriebenen Bedingungen mindestens ein Schmelzpeak zwischen 230 und 270 °C und bevorzugt zwischen 240 und 265 °C auftritt. Weiterhin sollte die Folie neben dem Schmelzpeak einen Fixierpeak zwischen 185 und 245° C aufweisen.

Für das Erreichen der genannten Barriere ist es weiterhin günstig, wenn die PEN-Konzentration bei mindestens 5 Gew.-% liegt.

Für das Erreichen der genannten Barriere ist es darüber hinaus günstig, wenn die Folie eine Orientierung delta p von größer 0,160 bevorzugt von größer 0,162 und besonders bevorzugt von größer 0,164 aufweist.

Neben den genannten Anteilen an PEN enthält die erfindungsgemäße Folie als Hauptbestandteil PET, d. h. Polyethylenterephthalat. Neben Terephthalsäure (TPA) und 2,6-Naphthalindicarbonsäure (NDA) als Monomere kann die Folie 0 bis 5 Gew.-% Isophthalsäure (bevorzugt 0,5 bis 2,5 Gew.-%) enthalten, wobei sich überraschenderweise gezeigt hat, dass ein Gehalt von 0,5 bis 2,5 Gew.-% Isophthalsäure (IPA) zu einer weiteren Verringerung der Sauerstoffpermeation von 2 bis 5 % führt. Neben den genannten Dicarbonsäuren sind selbstverständlich auch ihre Dimethylester geeignete Monomere. Andere Dicarbonsäuren bzw. Dimethylester wie z.B. 1,5-Naphthalindicarbonsäure sollten einen Anteil von 3 Gew.-%, bevorzugt 1 Gew.-% nicht überschreiten.

Das Hauptmonomer der Diolkomponente ist Ethylenglycol (EG). Im Gegensatz zu dem genannten positiven Effekt von IPA verringert sich die Barriere mit steigendem Diethylenglycolanteil (DEG). Daher sollte der DEG-Anteil 2 Gew.-% nicht überschreiten und liegt idealerweise zwischen 0,5 und 1,5 Gew.-%. Andere Comonomere-Diole wie z. B. Cyclohexandimethanol, 1,3-Propandiol, 1,4-Butandiol sollten einen Anteil von 3 Gew.-% nicht überschreiten und liegen bevorzugt bei einem Anteil von weniger als 1 Gew.-%.

Da die Folie erfindungsgemäß Regenerate aus anderen Anwendungen enthalten kann, enthält die Folie einer bevorzugten Ausführungsform mindestens einen optischen Aufheller. Die erfindungsgemäßen optischen Aufheller sind in der Lage, UV-Strahlen im Wellenlängenbereich von ca. 360 bis 380 nm zu absorbieren und als längerwelliges, sichtbares blauviolettes Licht wieder abzugeben. Geeignete optische Aufheller sind Bis-benzoxazole, Phenylcumarine und Bis-sterylbiphenyle, insbesondere Phenylcumarin, besonders bevorzugt Triazin-phenylcumarin (Tinopal®, Ciba-Geigy, Basel, Schweiz). Sofern zweckmäßig, können neben dem optischen Aufheller auch noch in Polyester lösliche blaue Farbstoffe zugesetzt werden. Als geeignete blaue Farbstoffe haben sich Kobaltblau, Ultramarinblau und Anthrachinonfarbstoffe, insbesondere Sudanblau 2 (BASF, Ludwigshafen, Bundesrepublik Deutschland), erwiesen. Die optischen Aufheller werden in Mengen von 10 ppm bis 50.000 ppm, insbesondere 20 ppm bis 30.000 ppm, besonders bevorzugt 50 ppm bis 25.000 ppm, bezogen auf das Gewicht der auszurüstenden Schicht, eingesetzt. Die blauen Farbstoffe werden in Mengen von 10 ppm bis 10.000 ppm, insbesondere 20 ppm bis 5.000 ppm, besonders bevorzugt 50 ppm bis 1.000 ppm, bezogen auf das Gewicht der auszurüstenden Schicht, eingesetzt.

Überraschenderweise hat sich gezeigt, dass die erfindungsgemäßen Polyesterfolien quasi frei von Pinholes sind. Die Anzahl der Pinholes (gemessen als Überschläge pro 100 $m^2$; s. Messmethoden) ist dabei < 30, bevorzugt <10, besonders bevorzugt < 5 und ganz besonders bevorzugt < 1. Unter Pinholes werden hier Löcher bzw. Dünnstellen der Folie von weniger als 90 % der Nenndicke verstanden. Es wird vermutet, dass die Reduktion der Pinholes zum einen auf intrinsische Faktoren wie beispielsweise Rezepturierung der Folie zurückzuführen ist. Neben diesen intrinsischen Faktoren spielt offenbar jedoch auch der Herstellprozess eine Rolle. So können auf Nippwalzen oder Kontaktwalzen aufliegende oder in den Oberflächen der Walzen steckende Partikel zu derartigen Beschädigungen führen. Dies führt dann zu einer großen Zahl periodisch auftretender Pinholes. Solche Fehler lassen sich durch regelmäßige Reinigung der betroffenen Walzen verhindern. In der Praxis hat es sich hierbei gezeigt, dass mit dem Absenken einer Reinigungsleiste, bei der es sich um eine "Bürste" aus mindestens 6 gegeneinander versetzten Reihen von 100 µm Polyestermonofilament-Borsten handelt, auf die betroffenen Walzen gute Ergebnisse erzielen lassen. Dies wird am besten während eines Rollenwechsels durchgeführt, mindestens aber alle 60.000 Produktionsmeter. Die Anzahl der Pinholes steigt mit abnehmender Foliendicke. Während Folien > 23 µm noch weitgehend frei von Pinholes sind, treten diese bei 12 µm dicken Folien bereits in der genannten Größenordnung (ca. 30 pro 100 $m^2$) auf. Bei 8 µm dünnen Folien treten diese bei Verzicht auf die genannte Maßnahme in weit höherer Zahl auf.

Die erfindungsgemäßen Folien weisen eine Transmission bei 330 nm von kleiner 25 % und bevorzugt von kleiner 10 % auf. Bei 350 nm weisen die erfindungsgemäßen Folien eine Transmission von kleiner 25 % und bevorzugt von kleiner 10 % auf.

Die Polyesterrohstoffe für die erfindungsgemäßen Folien können sowohl nach dem Umesterungsverfahren mit den üblichen Katalysatoren wie z.B. Zn-, Ca-, Li- und Mn-Salzen oder nach dem Direktveresterungsverfahren hergestellt werden.

Der Polyesterrohstoff enthält gegebenenfalls die zur Herstellung von Folien zur Verbesserung der Schlupf- und Gleiteigenschaften üblichen Additive (Partikel), z. B. anorganische Partikel wie Kaolin, Talk, $SiO_2$, $MgCO_3$, $CaCO_3$, $BaCO_3$, $CaSO_4$, $BaSO_4$, $Li_3PO_4$, $Ca_3(PO_4)_2$, $Mg_3(PO_4)_2$, $TiO_2$, $Al_2O_3$, MgO, SiC, LiF oder die Ca-, Ba-, Mn-Salze der eingesetzten Dicarbonsäuren. Es können allerdings auch Teilchen auf Basis vernetzter, unschmelzbarer, organischer Polymeren wie z. B. Polystyrole, Polyacrylate, Polymethacrylate zugesetzt werden. Bevorzugt werden die Partikel in einer Konzentration von 0,005 bis 5,0 Gew.-%, besonders bevorzugt in einer Konzentration von 0,01 bis 0,5 Gew.-%, eingesetzt. Die durchschnittliche Teilchengröße beträgt 0,001 bis 10 μm, bevorzugt 0,005 bis 3 μm.

Handelsübliche Partikel wie Sylobloc® (Grace/Worms/Deutschland) oder Sylysia® (Fuji/Japan) enthalten immer auch einen Grobkornanteil. Dieser kann wie unten beschrieben das Auftreten von Pinholes fördern und sollte daher so gering wie möglich gehalten werden. Dies ist in der Regel gegeben, wenn die zur Herstellung der Folie verwendete Rohstoffmischung in einem so genannten Filtertest (s. Messmethoden) einen Druckanstieg von weniger als 10 (1.000), bevorzugt weniger als 5 (500) und besonders bevorzugt weniger als 3 (300) bar (kPa) nach 100 Minuten aufweist. Dies kann dadurch erreicht werden, dass der Anteil von Partikeln mit einer mittleren Teilchengröße zwischen 1 und 3 μm (z. B. Sylysia 320) kleiner 1.000 ppm, bevorzugt kleiner 700 ppm und besonders bevorzugt kleiner 500 ppm, gehalten wird und der Anteil von Teilchen mit einer mittleren Teilchengröße zwischen 3 und 10 μm kleiner 700 ppm und bevorzugt kleiner 500 ppm gehalten wird. Das $d_{90}/d_{10}$-Verhältnis sollte kleiner als 1,8 sein und bevorzugt kleiner 1,7. Geeignete Partikel sind hier u.a. Sylysia 320 und Sylysia 310 von Fuji-Sylysia/Japan.

Die Standardviskosität SV (DCE) der eingesetzten Polyesterrohstoffe, gemessen in Dichloressigsäure nach DIN 53728, liegt zweckmäßigerweise zwischen 400 und 1200, vorzugsweise zwischen 700 und 900.

In einer bevorzugten Ausführungsform wird der Folie der PEN-Anteil oder ein Teil des PEN-Anteils zugeführt, indem ein Regenrat aus einer anderen PEN-Anwendung zudosiert wird. Dies kann z. B. Regenerat aus der PEN-Kondensatorfolienproduktion sein (in der Regel 100 Gew.-% PEN) oder besonders bevorzugt ein Regenerat aus einer Anwendung, bei der wie eingangs erwähnt eine oder mehrere PEN-Schichten auf einer PET-Basis verwendet werden. Es hat sich gezeigt, dass die Laufsicherheit bei Verwendung eines solchen Regenerats besonders gut ist, da hier PET und PEN bereits vorgemischt sind und es so zu einer optimaleren Verstreckbarkeit kommt. Bei Verwendung von reinem PEN-Regenerat hat es sich als günstig erwiesen, wenn dieses nicht wie sonst vor dem Wiedereinsatz üblich festphasenkondensiert wird. Neben diesem Fremdregenerat enthält die Folie noch bis zu 65 Gew.-% eigenes Regenerat oder Regenerat aus anderen PET-Folienanwendungen, wobei es sich als günstig für die Prozessstabilität erwiesen hat, wenn die Folie mindestens 20 Gew.-% eigenes Regenerat enthält, da dann PET/PEN bereits gut gemischt ist.

Die erfindungsgemäße Folie kann sowohl einschichtig als auch mehrschichtig sein.

In der mehrschichtigen Ausführungsform ist die Folie aus mindestens einer Basisschicht (B) und mindestens einer Deckschicht (A) bzw. (C) aufgebaut, wobei insbesondere ein dreischichtiger A-B-A- oder A-B-C-Aufbau bevorzugt ist.

Für diese Ausführungsform ist es wesentlich, dass die oben beschriebenen Bereiche für den PEN-Gehalt, bezogen auf die Gesamtfolie, eingehalten werden.

Die Folie kann auch mindestens einseitig mit einer Beschichtung, mit einem Copolyester oder mit einem Haftvermittler versehen sein.

Die erfindungsgemäßen Polyesterfolien können nach bekannten Verfahren aus einem Polyesterrohstoff mit gegebenenfalls weiteren Rohstoffen und den oben genannten lichtschutzaktiven Komponenten und/oder weiteren üblichen Additiven in üblicher Menge von 0,1 bis maximal 10 Gew.-% sowohl als Monofolien als auch als mehrschichtige, gegebenenfalls koextrudierte Folien mit gleichen oder unterschiedlich ausgebildeten Oberflächen hergestellt werden, wobei eine Oberfläche beispielsweise Partikel enthält und die andere Oberfläche keine Partikel enthält. Ebenso können eine oder beide Oberflächen der Folie nach bekannten Verfahren mit einer üblichen funktionalen Beschichtung versehen werden. In einer weiteren Ausführungsform für Anwendungen mit besonders hohen Ansprüchen an die Barriere wird die Folie mit einer Metall(Halbmetall)oxydschicht wie z. B. $Al_2O_x$ oder $SiO_x$ bedampft.

Bei dem bevorzugten Extrusionsverfahren zur Herstellung der Polyesterfolie wird das aufgeschmolzene Polyestermaterial durch eine Schlitzdüse extrudiert und als weitgehend amorphe Vorfolie auf einer Kühlwalze abgeschreckt. Diese Folie wird anschließend erneut erhitzt und in Längs- und Querrichtung bzw. in Quer- und in Längsrichtung bzw. in Längs-, in Quer- und nochmals in Längsrichtung und/oder Querrichtung gestreckt. Die Strecktemperaturen liegen im allgemeinen bei $T_g$ +10 °C bis $T_g$ +60 °C ($T_g$ = Glastemperatur), das Streckverhältnis der Längsstreckung liegt üblicherweise bei 2 bis 6, insbesondere bei 3 bis 4,5, besonders bevorzugt bei 3,9 bis 4,2, das der Querstreckung bei 2 bis 5, insbesondere bei 3 bis 4,5, besonders bevorzugt bei 3,8 bis 4,2, und das der gegebenenfalls durchgeführten zweiten Längsstreckung bei 1,1 bis 3. Die erste Längsstreckung kann gegebenenfalls gleichzeitig mit der Querstreckung (Simultanstreckung) durchgeführt werden. Anschließend erfolgt die Thermofixierung der Folie bei Ofentemperaturen von 180 bis 260 °C, insbesondere bei 220 bis 250 °C. Dann wird die Folie abgekühlt und aufgewickelt.

Der letztlich für Verpackungszwecke eingesetzte Folienverbund enthält neben der erfindungsgemäßen Folie je nach Verwendungszweck weitere Folien, beispielsweise Folien aus PET oder aus einem orientierten Polyamid (oPA) oder PE- bzw PP-Siegelfolien; oder die Folie oder der Verbund kann zur Steuerung der Siegeleigenschaften mit einer Siegelschicht aus beispielsweise Polypropylen (PP) oder Polyethylen (PE) beschichtet sein. Das Zusammenfügen der einzelnen Folien zu einem Folienverbund erfolgt bevorzugt mittels Kaschierklebern, z. B. auf der Basis von Polyurethan.

Die letztlich zum Einsatz kommende Verpackung besteht dann entweder aus dem mit sich selbst gesiegelten Verbund (Beutelverpackung), oder der Verbund wird als "Deckel" auf eine Unterlage (Tray) aufgebracht. Bei der zweiten Möglichkeit ist zu beachten, dass der Tray, falls transparent, ebenfalls eine geringe UV-Durchlässigkeit aufweisen sollte, was z. B. durch Aufkaschieren der erfindungsgemäßen Folie erreicht werden kann. Transparente Laminate oder Verbunde sind beispielsweise in DE-A-33 00 411 und DE-A-26 44 209 beschrieben.

Die Gesamtdicke der erfindungsgemäßen Verbundfolie, die sich mindestens aus der erfindungsgemäßen Folie I und einer Folie II zusammensetzt, kann innerhalb weiter Grenzen variieren und richtet sich nach dem Einsatzzweck. Bevorzugt haben die erfindungsgemäßen Verbundfolien eine Dicke im Bereich von 9 bis 1200 μm, insbesondere von 10 bis 1000 μm, besonders bevorzugt von 20 bis 800 μm.

Die Folie II der erfindungsgemäßen Verbundfolie kann eine Thermoplastfolie und/oder eine Standardthermoplastfolie und/oder eine Polyolefinfolie und/oder die erfindungsgemäße Folie 1 sein. Diese zweite Folie wird bevorzugt auf die Seite der Folie I aufgebracht, die eine zusätzliche Funktionalität aufweist ($SiO_x$-Beschichtung, Coronaund/oder Flammbehandlung und/oder Haftvermittler und/oder Copolyester oder $Al_2O_x$-Beschichtung und/oder Druckfarben, um nur einige zu nennen), kann aber auch auf die Folienseite aufgebracht werden, die keine Funktionalität ausweist.

Die Folie II kann einschichtig oder mehrschichtig und kann - wie Folie I - durch Verstrecken orientiert worden sein und kann mindestens eine Siegelschicht haben. Die zweite Folie kann mit oder ohne Klebstoff mit Folie I gemäß der Erfindung verbunden sein.

Die Dicke dieser Folie II liegt im allgemeinen zwischen 4 und 700 μm.

Die Verbundfolien erhält man im allgemeinen durch Aufeinanderlaminieren oder Kaschieren mindestens der eingesetzten Folien I und II mit oder ohne dazwischen liegender Klebstoffschicht, indem man diese zwischen auf 30 bis 90 °C temperierten Walzen durchleitet.

Es ist aber beispielsweise auch möglich, die Folie II durch In-line-Beschichtung (Schmelzextrusion) auf die bestehende Folie I aufzubringen.

Bei Verwendung von Klebstoffen werden diese auf eine Folienoberfläche der Folie I und/oder der Folie II nach bekannten Verfahren aufgebracht, insbesondere durch Auftragen aus Lösungen oder Dispersionen in Wasser oder organischen Lösungsmitteln. Die Lösungen haben hierbei gewöhnlich eine Klebstoffkonzentration von 5,0 bis 40,0 Gew.-%, um auf der Folie I und/oder II eine Klebstoffmenge von 1,0 bis 10,0 $g/m^2$ zu ergeben.

Als besonders zweckmäßig haben sich Klebstoffe erwiesen, die aus thermoplastischen Harzen wie Celluloseestern und -ethern, Alkyl- und Acrylestern, Polyimiden, Polyurethanen oder Polyestern oder aus hitzehärtbaren Harzen wie Epoxidharzen, Harnstoff/Formaldehyd-, Phenol/Formaldehyd- oder Melamin/Formaldehyd-Harzen oder aus synthetischen Kautschuken bestehen.

Als Lösungsmittel für den Klebstoff eigenen sich z. B. Kohlenwasserstoffe wie Ligroin und Toluol, Ester wie Ethylacetat oder Ketone wie Aceton und Methylethylketon.

Überraschend war insbesondere, dass trotz der erfindungsgemäß niedrigen PEN-Gehalte auch Verbunde mit dünnen PET/PEN-Copolymerfolien (z. B. 12 μm) das Füllgut so gut vor dem Verderben unter UV-Licht schützen, dass Verlängerungen der Shelflife von über 100 % auch ohne die Verwendung von zusätzlichen UV-Absorbern möglich sind.

Die Erfindung wird im folgenden anhand von Ausführungsbeispielen näher erläutert.

Die Messung der einzelnen Eigenschaften erfolgte dabei gemäß der folgenden Normen bzw. Verfahren.

**Messmethoden**

Lichttransmission

Unter der Lichttransmission (hier UV-Transmission) ist das Verhältnis des insgesamt durchgelassenen Lichtes zur einfallenden Lichtmenge zu verstehen.

Die Lichttransmission wird mit dem Messgerät "Hazegard plus" nach ASTM D 1003 gemessen.

SV (DCE), IV (DCE)

Die Standardviskosität SV (DCE) wird, angelehnt an DIN 53726, bei 25 °C in Dichloressigsäure gemessen. Die intrinsische Viskosität (IV) berechnet sich wie folgt aus der Standardviskosität:

$$IV = [\eta] = 6,907 \cdot 10^{-4} \; SV \; (DCE) + 0,063096 \; [dl/g]$$

Gelbwert

Der Gelbwert G ist die Abweichung von der Farblosigkeit in Richtung "Gelb" und wird gemäß DIN 6167 gemessen. Gelbwert G-Werte von <5 sind visuell nicht sichtbar.

Pinholes

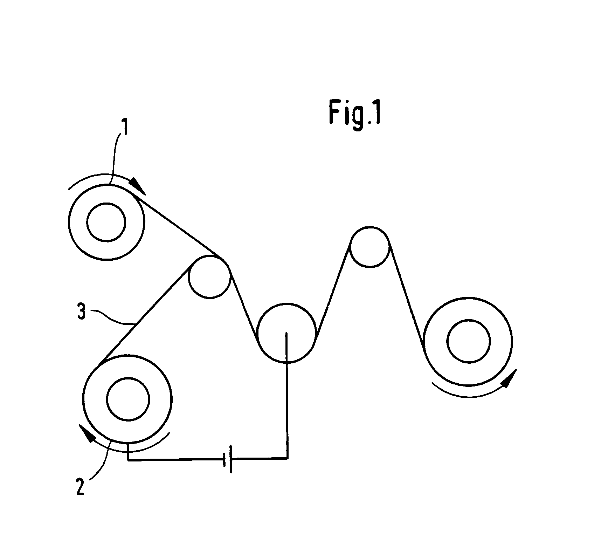

Die zu testende Folie (1) [siehe Figur 1] von 50 cm Breite wird zusammen mit einer metallisierten Messfolie (2) (5 mm schmaler als die zu testende Folie) über eine Metallwalze gezogen. Zwischen der metallisierten Folie (2) und der Metallwalze wird eine Spannung von 250 V/µm (bezogen auf die Dicke der zu testenden Folie; 12 µm Folie = 3000 V) angelegt. Die zu testende Folie (1) liegt dabei auf der Metallwalze auf, und die metallisierte Seite (3) der metallisierten Messfolie (2) liegt auf der zu testenden Folie (1).
Die Abzugsgeschwindigkeit beträgt 4 m/min. Es werden mindesten 100 m² vermessen (die Breite der zu testenden Folie kann dabei zwischen 20 cm und 1,2 m liegen). Es werden die elektrischen Überschläge zwischen Messfolie und Metallwalze gezählt und in Überschlägen pro 100 m² angegeben.

Filtertest

Das Polymergranulat bzw. die Granulatmischung wird in einem handelsüblichen Wirbeltrockner bei 150 °C für 20 min getrocknet. Das Granulat wird in einem handelsüblichen Extruder aufgeschmolzen und bei 295 °C über einen Faservliesfilter der Nennweite 10 µm der Firma Seebach (Deutschland) gefiltert. Der Druck vor dem Filter wird mit einem Druckfühler (Druckaufnehmer von Wika/Deutschland ; Typ Tronic Line 0- 350 bar) gemessen und aufgezeichnet. Der relevante Filtertest-Wert für 100 min ergibt sich, indem man von dem Druck nach 100 min den Druck nach 15 min subtrahiert.

Planare Orientierung delta p

Die Bestimmung der planaren Orientierung erfolgt über die Messung der Brechungsindizes mit dem Abbe-Refraktometer nach folgendem Verfahren:

| | |
|---|---|
| Probengröße und Probenlänge | 60 bis 100 mm |
| Probenbreite | entspricht Prismenbreite von 10 mm |

Zur Bestimmung von $n_{MD}$ und $n_z$ muss die zu messende Probe aus der Folie ausgeschnitten werden, wobei die Laufkante der Probe exakt mit der TD-Richtung übereinstimmen muss. Zur Bestimmung von $n_{TD}$ und $n_z$ muss die zu messende Probe aus der Folie ausgeschnitten werden, wobei die Laufkante der Probe exakt mit der MD-Richtung übereinstimmen muss. Die Proben sind aus der Mitte der Folienbahn zu entnehmen. Es ist dafür Sorge zu tragen, dass das Abbe-Refraktometer eine Temperatur von 23 °C hat. Auf das vor der Messung gut gesäuberte untere Prisma wird mit Hilfe eines Glasstabes ein wenig Dijodmethan (N = 1,745) bzw. Dijodmethan-Bromnaphthalin-Gemisch aufgetragen. Der Brechungsindex des Gemisches muss größer als 1,685 sein. Darauf wird zuerst die in TD-Richtung ausgeschnittene Probe aufgelegt, so dass die gesamte Prismenoberfläche bedeckt ist. Mit Hilfe eines Papiertaschentuches wird nun die Folie fest auf das Prisma aufgebügelt, so dass die Folie fest und glatt aufliegt. Die überflüssige Flüssigkeit muss abgesaugt werden. Danach wird ein wenig von der Messflüssigkeit auf die Folie getropft. Das zweite Prisma wird heruntergeklappt und fest angedrückt. Nun wird mit Hilfe der rechten Rändelschraube die Anzeigeskala so weit gedreht, bis im Bereich 1,62 bis 1,68 ein Übergang von hell auf dunkel im Sichtfenster zu sehen ist. Ist der Übergang von hell auf dunkel nicht scharf, werden mit Hilfe der oberen Rändelschraube die Farben so zusammengeführt, dass nur eine helle und eine dunkle Zone sichtbar sind. Die scharfe Übergangslinie wird mit Hilfe der unteren Rändelschraube in den Kreuzungspunkt der beiden (im Okular) diagonalen Linien gebracht. Der nun in der Messskala angezeigte Wert wird abgelesen und in das Messprotokoll eingetragen. Dies ist der Brechungsindex in Maschinenrichtung $n_{MD}$. Nun wird die Skala mit der unteren Rändelschraube so weit verdreht, dass der im Okular sichtbare Bereich zwischen 1,49 und 1,50 zu sehen ist.

Jetzt wird der Brechungsindex in $n_z$ (in Dickenrichtung der Folie) ermittelt. Damit der nur schwach sichtbare Übergang besser zu sehen ist, wird auf das Okular eine Polarisationsfolie gelegt. Diese ist solange zu drehen, bis der Übergang deutlich zu sehen ist. Es gilt das gleiche wie bei der Bestimmung von $n_{MD}$. Ist der Übergang von hell auf dunkel nicht scharf (farbig), dann werden mit Hilfe der oberen Rändelschraube die Farben zusammengeführt, so dass ein scharfer Übergang zu sehen ist. Diese scharfe Übergangslinie wird mit Hilfe der unteren Rändelschraube in den Kreuzungspunkt der beiden diagonalen Linien gebracht und der auf der Skala angezeigte Wert abgelesen und in die Tabelle eingetragen.

Anschließend wird die Probe gedreht und die entsprechenden Brechungsindizes $n_{MD}$ und $n_z$ der anderen Oberflächenseite gemessen und in eine entsprechende Tabelle eingetragen.

Nach der Bestimmung der Brechungsindizes in MD-Richtung bzw. in Dickenrichtung wird der in MD-Richtung herausgeschnittene Probenstreifen aufgelegt und entsprechend die Brechungsindizes $n_{TD}$ und $n_z$ bestimmt. Der Streifen wird umgedreht und die Werte für die B-Seite gemessen. Die Werte für die A-Seite und die B-Seite werden zu mittleren Brechungswerten zusammengefasst. Die Orientierungswerte werden dann aus den Brechungsindizes nach den folgenden Formeln berechnet:

$$\text{delta } n = n_{MD} - n_{TD}$$

$$\text{delta } p = (n_{MD} + n_{TD})/2 - n_z$$

$$n_{av} = (n_{MD} + n_{TD} + n_z)/3$$

Glasübergangstemperatur

Die Glasübergangstemperatur $T_g$ wurde anhand von Folienproben mit Hilfe der DSC (Differential Scanning Calorimetry) bestimmt (DIN 73 765). Verwendet wurde ein DSC 1090 der Fa. DuPont. Die Aufheizgeschwindigkeit betrug 20 K/min und die Einwaage ca. 12 mg. Im ersten Aufheizvorgang wurde der Glasübergang $T_g$ ermittelt. Die Proben zeigten vielfach eine Enthalpierelaxation (ein Peak) zu Beginn des stufenförmigen Glasübergangs. Als $T_g$ wurde die Temperatur genommen, bei der die stufenförmige Veränderung der Wärmekapazität - unabhängig von der peakförmigen Enthalpierelaxation - ihre halbe Höhe im ersten Aufheizvorgang erreichte. In allen Fällen wurde nur eine einzige Glasübergangsstufe im Thermogramm beim ersten Aufheizen beobachtet.

Schmelzpeak

Die Glasübergangstemperatur $T_g$ wurde anhand von Folienproben mit Hilfe der DSC (Differential Scanning Calorimetry) bestimmt (DIN 73 765). Verwendet wurde ein DSC 1090 der Fa. DuPont. Die Aufheizgeschwindigkeit betrug 20 K/min und die Einwaage ca. 12 mg. Im ersten Aufheizvorgang wurde der Schmelzpeak ermittelt. Als Schmelzpeak wird dabei das Maximum des größten endothermen Peaks zwischen 180 und 280 °C.

Folienfixierpeak

Der Folienfixierpeak wird mittels DSC-Analyse mit einem Gerät der Fa. DuPont ermittelt. Beim ersten Aufheizen bei einer Heizrate von 60 K/min tritt ein endothermer Peak vor dem Schmelzpeak in der Temperaturregion zwischen 180 und 250 °C auf.

Sauerstoffbarriere

Die Messung der Sauerstoffbarriere erfolgte mit einem OX-TRAN 2/20 von Mocon Modern Controls (USA) entsprechend DIN 53 380, Teil 3.

Shelflife

Je 200 g gekochter Schinken in 2,5 mm dicken Scheiben des Durchmessers 10 cm werden in der Verbundverpackung mit der erfindungsgemäßen Folie plaziert und diese anschließend verschlossen. Eine zweite Verbundverpackung des gleichen Typs, aber unter Verwendung einer handelsüblichen PET-Folie gleicher Dicke (hier RNK von Mitsubishi Polyesterfilm Europe GmbH) wird ebenso gefüllt. Je drei Verpackungen des UV-geschützten erfindungsgemäßen Verbundes und je drei Verpackungen mit der handelsüblichen PET-Folie werden anschließend in eine offene Kühltruhe mit der Temperatur +3°C verbracht. 1 m über den Verpackungen (Seite mit erfindungsgemäßer Folie oben) sind 5 handelsübliche Neonröhren des Typs Phillips TL 20W/05 angebracht. Die Verpackungen werden täglich auf sichtbare Verfärbungen überprüft (visuell). Die Zeit bis zum Auftreten von Verfärbungen wird notiert und der Mittelwert (in Stunden) der Verpackungen aus handelsüblicher PET-Folie wird 100 % gesetzt. Die prozentuale Abweichung der erfindungsgemäßen Verpackungen von diesem Wert wird berechnet, indem der Mittelwert (in Stunden), bis an diesen Verpackungen Verfärbungen auftreten, durch den Mittelwert der Verpackungen aus handelsüblicher PET-Folie geteilt wird und mit 100 multipliziert wird. Von dem Ergebnis werden 100 abgezogen.

Bei nachstehenden Beispielen und Vergleichsbeispielen handelt es sich jeweils um einschichtige, transparente Folien unterschiedlicher Dicke.

Folienherstellung

Thermoplast-Chips wurden gemäß den in den Beispielen angegebenen Verhältnissen gemischt und in einem Wirbelschichttrockner bei 155 °C für 1 min vorkristallisiert, anschließend für 3 h in einem Schachttrockner bei 150 °C getrocknet und bei 290 °C extrudiert. Das geschmolzene Polymer wurde aus einer Düse über eine Abzugswalze abgezogen. Der Film wurde um den Faktor 4,0 in Maschinenrichtung bei 116 °C gestreckt und in einem Rahmen bei 110 °C eine Querstreckung um den Faktor 3,9 durchgeführt. Anschließend wurde die Folie bei 225 °C thermofixiert und in Querrichtung um 2 % bei Temperaturen von 200 bis 180 °C relaxiert. Die Nipp- und Kontaktwalzen werden mit der beschriebenen Bürste (6 gegeneinander versetzte Reihen von 100 μm Polyestermonofilament-Borsten) alle 30.000 m gereinigt.

Verbundherstellung

Aus den Folien aus den Beispielen werden jeweils drei verschiedene Verbunde gefertigt. Der Verbund wird für die Messung der Shelflife auf einen handelsüblichen A-PET-Tray als Unterlage (dem UV-Licht abgewandte Seite) gesiegelt.

Verbund A

Verbundfolie mit PE

Die Folie aus dem Beispiel wird mit einem Kleber (Adcote® 700 A+C der Firma Rohm&Haas, Deutschland) beschichtet, so dass die gebildete Klebstoffschicht 0,5 g/m$^2$ wiegt. Anschließend wird eine 40 μm dicke Folie aus Polyethylen niedriger Dichte (Buklin® 40 μm der Firma B&K, Deutschland) auf die mit Kleber (Verankerungsmittel) beschichtete Folie aus dem Beispiel aufkaschiert.

Verbund B

Verbundfolie mit PP

Die Folie aus dem Beispiel wird mit einem Kleber (Adcote 700 A+C der Firma Rohm&Haas, Deutschland) beschichtet, so dass die gebildete Klebstoffschicht 0,5 g/m$^2$ wiegt. Anschließend wird eine 30 μm dicke Siegelfolie aus Polypropylen (GND 30 der Firma Trespaphan, Deutschland) auf die mit Kleber (Verankerungsmittel) beschichtete Folie aus dem Beispiel aufkaschiert.

Verbund C

Verbundfolie mit PET

Die Folie aus dem Beispiel wird mit einem Kleber (Adcote 700 A+C der Firma Rohm&Haas, Deutschland) beschichtet, so dass die gebildete Klebstoffschicht 0,5 g/m$^2$ wiegt. Anschließend wird eine 20 μm dicke Siegelfolie aus PET, die biaxial orientiert ist ((Hostaphan RHS 20 der Fa. Mitsubishi Polyester Film GmbH), auf die mit Kleber (Verankerungsmittel) beschichtete Folie aus dem Beispiel aufkaschiert.

**Beispiele**

Als Vergleich für die Verbesserung der Shelflife dienten handelsübliche Verpackungsfolien der Firma Mitsubishi Polyester Film GmbH (Deutschland): im einzelnen RNK12, RNK23 und RN8.

Beispiel 1

Es wird eine 23 μm dicke transparente Folie hergestellt.

Rohstoffe:

| R1 | PET-Rohstoff RT49 (KoSa, Offenbach, Deutschland), SV = 800 | 46 Gew.-% |
|---|---|---|
| R2 | PET/PEN-Folienregenrat mit 10 Gew.-% PEN-Anteil, SV = 700, IPA-Anteil = 4 Gew.-%, enthält 500 ppm Sylysia 320 und 500 ppm Aerosil TT600 (Degussa) | 50 Gew.-% |
| R3 | PET-Rohstoff, SV = 800, enthält 10.000 ppm Sylysia 320 und 15.000 ppm Aerosil TT600 (Degussa/Deutschland) | 4 Gew.-% |

Sauerstoffbarriere = 50 $\{cm^3/(m^2 \cdot d \cdot bar)\} \cdot \{23\mu m/12\ \mu m\}$
Shelflife-Anstieg in % im Vergleich zu einem analogen Verbund mit der Folie RNK 23 (Mitsubishi Polyester Film GmbH, Wiesbaden, Deutschland):

| Verbund A | 50 % |
|---|---|
| Verbund B | 55 % |
| Verbund C | 35% |

Beispiel 2

Es wird eine 12 μm dicke transparente Folie hergestellt.
Rohstoffe (Gew.-%-Angaben beziehen sich auf den Anteil von 60 Gew.-% an frischem Rohstoff; die Folie enthält 40 Gew.-% Eigenregenerat):

| R1 | PET-Rohstoff RT49, SV = 800 | 85 Gew.-% |
|---|---|---|
| R3 | PET-Rohstoff von Kosa, SV = 800, enthält 10.000 ppm Sylysia 320 und 15.000 ppm Aerosil TT600 (Degussa/Deutschland) und 0,2 Gew.-% Anthrachinonfarbstoff (Sudanblau 2, BASF, Ludwigshafen, Bundesrepublik Deutschland) | 5 Gew.-% |
| R4 | 100 Gew.-% PEN (KoSa, Offenbach, Deutschland), SV = 650 | 10 Gew.-% |

Sauerstoffbarriere = 93 $\{cm^3/(m^2 \cdot d \cdot bar)\} \cdot \{12\ \mu m/12\ \mu m\}$
Shelflife-Anstieg in % im Vergleich zu einem analogen Verbund mit der Folie RNK 12 (Mitsubishi Polyester Film GmbH, Wiesbaden, Deutschland):

| Verbund A | 102% |
|---|---|
| Verbund B | 98 % |
| Verbund C | 60 % |

Gelbzahl = 1

Beispiel 3

Es wird eine 8 μm dicke transparente Folie hergestellt.
Rohstoffe (Gew.-%-Angaben beziehen sich auf den Anteil von 60 Gew.-% an frischem Rohstoff; die Folie enthält 40 Gew.-% Eigenregenerat):

| R1 | PET-Rohstoff RT49, SV = 800 | 80 Gew.-% |
|---|---|---|
| R3 | PET-Rohstoff, SV = 800, enthält 10.000 ppm Sylysia 320 und 15.000 ppm Aerosil TT600 (Degussa/Deutschland) | 6 Gew.-% |
| R4 | 100 Gew.-% PEN (KoSa), SV = 650 | 14 Gew.-% |

Sauerstoffbarriere = 137 $\{cm^3/(m^2 \cdot d \cdot bar)\} \cdot \{8\ \mu m/12\ \mu m\}$

Shelflife-Anstieg in % im Vergleich zu einem analogen Verbund mit der Folie RN 8 (Mitsubishi Polyester Film GmbH, Wiesbaden, Deutschland):

| Verbund A | 114% |
|---|---|
| Verbund B | 99 % |
| Verbund C | 75% |

Vergleichsbeispiel 1

Wie Beispiel 3, aber es wurde auf die Walzenreinigung verzichtet und statt 6 Gew.-% R3 wurden 6 Gew.-% eines PET-Rohstoffs mit einem SV von 800 und 7.000 ppm Sylobloc® CP4-8191 ($d_{50}$ = 7 $\mu$m) der Firma Grace (Worms/ Deutschland) und 15.000 ppm Aerosil eingesetzt.

Sauerstoffbarriere = 138 $\{cm^3/(m^2 \cdot d \cdot bar)\} \cdot \{8\mu m/12\ um\}$

Shelflife-Anstieg in % im Vergleich zu einem analogen Verbund mit der Folie RN 8 (Mitsubishi Polyester Film GmbH, Wiesbaden, Deutschland):

| Verbund A | 116% |
|---|---|
| Verbund B | 10 % |
| Verbund C | 70% |

Die Kontrolle der Verpackungen mit Verbund B ergab, dass die geringe Verbesserung gegenüber dem Standard auf mehrere kleine verfärbte Stellen zurückzuführen war, deren Ursache Pinholes in der 8 $\mu$m dicken Folie waren.

**Patentansprüche**

1.  Polyesterfolie mit einer Dicke von 4 bis 23 $\mu$m, die neben Polyethylenterephthalat als Hauptbestandteil 2 bis 20 Gew.-% Polyethylennaphthalat (bezogen auf die Masse der Folie) enthält und weniger als 30 Pinholes pro 100 $m^2$ aufweist.

2.  Polyesterfolie nach Anspruch 1, **gekennzeichnet durch** eine Sauerstoffbarriere von kleiner 100 $\{cm^3/(m^2 \cdot d \cdot bar)\}$ $\cdot\{$Foliendicke in $\mu$m/12 $\mu$m$\}$.

3.  Polyesterfolie nach Anspruch 1 oder 2, **gekennzeichnet durch** einen Schmelzpeak zwischen 230 und 270 °C.

4.  Polyesterfolie nach einem der Ansprüche 1 bis 3, **gekennzeichnet durch** einen Polyethylenterephthalat-Gehalt von mindestens 5 Gew.-% (bezogen auf die Masse der Folie).

5.  Polyesterfolie nach einem der Ansprüche 1 bis 4, **gekennzeichnet durch** eine planare Orientierung delta p von größer 0,160.

6.  Polyesterfolie nach einem der Ansprüche 1 bis 5, **gekennzeichnet durch** einen Isophthalsäure-Gehalt von >0 bis 5 Gew.-% (bezogen auf die Masse der Folie).

7.  Polyesterfolie nach einem der Ansprüche 1 bis 6, **gekennzeichnet durch** eine Transmission bei 330 nm und 350 nm von < 25%.

8.  Polyesterfolie nach einem der Ansprüche 1 bis 7, **dadurch gekennzeichnet, dass** der Anteil von Partikeln in der Folie mit einer mittleren Teilchengröße zwischen 1 und 3 $\mu$m kleiner 1000 ppm ist und der Anteil von Teilchen mit einer mittleren Teilchengröße zwischen 3 und 10 µm kleiner 700 ppm ist.

9. Verfahren zur Herstellung einer Polyesterfolie nach Anspruch 1, **dadurch gekennzeichnet, dass** man Polyestermaterial, welches neben Polyethylenterephthalat als Hauptbestandteil 2 bis 20 Gew.-% Polyethylennaphthalat enthält, aufschmilzt, durch eine Schlitzdüse extrudiert, als weitgehend amorphe Vorfolie auf einer Kühlwalze abschreckt, anschließend erneut erhitzt und in Längs- und Querrichtung oder in Quer- und in Längsrichtung oder in Längs-, in Quer- und nochmals in Längsrichtung und/oder Querrichtung streckt, anschließend thermofixiert, abkühlt und aufwickelt.

10. Verfahren nach Anspruch 9, **dadurch gekennzeichnet, dass** die Folie während ihrer Herstellung mit einer oder mehreren Walzen in Kontakt kommt, die zuvor gereinigt worden ist (sind).

11. Verpackungsverbund aus einer Folie nach Anspruch 1 und einer weiteren Folie.

12. Verpackungsverbund nach Anspruch 11, **dadurch gekennzeichnet, dass** die weitere Folie Polyesterfolie, Polyamidfolie, Polyethylenfolie oder Polypropylenfolie ist.

13. Verwendung der Folie nach Anspruch 1 zur Herstellung von Verpackungsverbunden.

14. Verwendung von Polyethylennaphthalat in Verpackungsverbunden als UV-Absorber.

# Fig.1

**Europäisches Patentamt**

## EUROPÄISCHER RECHERCHENBERICHT

Nummer der Anmeldung

EP 03 01 2259

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 839 854 A (TORAY INDUSTRIES) 6. Mai 1998 (1998-05-06) * Seite 2, Zeile 22 - Seite 2, Zeile 24 * * Seite 9, Zeile 5 - Seite 9, Zeile 9 * * Beispiele 2,3,6,7 * * Ansprüche 1-4 * | 1,4,9, 11-13 | C08J5/18 C08L67/02 B32B27/36 |
| A | GB 1 444 163 A (TEIJIN LTD) 28. Juli 1976 (1976-07-28) * das ganze Dokument * | 1-14 | |
| X | US 2001/009722 A1 (ALLEN SCOTT I ET AL) 26. Juli 2001 (2001-07-26) * Seite 1, Absatz 11 * * Ansprüche 1-3 * | 14 | |
| X | PATENT ABSTRACTS OF JAPAN vol. 1999, no. 13, 30. November 1999 (1999-11-30) & JP 11 227840 A (SHISEIDO CO LTD), 24. August 1999 (1999-08-24) * Zusammenfassung * | 14 | RECHERCHIERTE SACHGEBIETE (Int.Cl.7) C08J C08L B32B |

Der vorliegende Recherchenbericht wurde für alle Patentansprüche erstellt

| Recherchenort | Abschlußdatum der Recherche | Prüfer |
|---|---|---|
| MÜNCHEN | 11. September 2003 | Puttins, U |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 03 01 2259

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-09-2003

| Im Recherchenbericht angeführtes Patentdokument | | Datum der Veröffentlichung | Mitglied(er) der Patentfamilie | | | Datum der Veröffentlichung |
|---|---|---|---|---|---|---|
| EP 0839854 | A | 06-05-1998 | JP | 9302113 | A | 25-11-1997 |
| | | | DE | 69719143 | D1 | 27-03-2003 |
| | | | DE | 69719143 | T2 | 24-07-2003 |
| | | | EP | 0839854 | A1 | 06-05-1998 |
| | | | US | 5948525 | A | 07-09-1999 |
| | | | CA | 2226933 | A1 | 20-11-1997 |
| | | | CN | 1197465 | A ,B | 28-10-1998 |
| | | | WO | 9743332 | A1 | 20-11-1997 |
| | | | JP | 10120803 | A | 12-05-1998 |
| | | | JP | 10279708 | A | 20-10-1998 |
| GB 1444163 | A | 28-07-1976 | JP | 49059175 | A | 08-06-1974 |
| | | | DE | 2350637 | A1 | 18-04-1974 |
| | | | FR | 2202124 | A1 | 03-05-1974 |
| | | | NL | 7313874 | A | 11-04-1974 |
| US 2001009722 | A1 | 26-07-2001 | AU | 1453800 | A | 05-06-2000 |
| | | | BR | 9915397 | A | 07-08-2001 |
| | | | CA | 2351704 | A1 | 25-05-2000 |
| | | | CN | 1330589 | T | 09-01-2002 |
| | | | EP | 1133394 | A1 | 19-09-2001 |
| | | | JP | 2002529288 | T | 10-09-2002 |
| | | | TW | 486423 | B | 11-05-2002 |
| | | | WO | 0029212 | A1 | 25-05-2000 |
| JP 11227840 | A | 24-08-1999 | KEINE | | | |

EPO FORM P0461

Für nähere Einzelheiten zu diesem Anhang : siehe Amtsblatt des Europäischen Patentamts, Nr.12/82